# EUROPEAN PATENT APPLICATION

(11) **EP 2 881 203 A1**
(43) Date of publication of application: **10.06.2015**
(21) Application number: 13825071.7
(22) Date of filing: 30.07.2013
(51) Int. Cl.: B23G 7/00

(54) **MACHINING METHOD FOR FEMALE SCREW AND DEVICE FOR SAME**

(30) Priority: 01.08.2012 JP 2012171384
(71) Applicant: M. H. Center Limited, Misato-shi Saitama 341-0034 (JP)
(72) Inventor: AOYAMA, Tsuyoshi, Misato-shi Saitama 341-0034 (JP)
(74) Representative: Zeitler Volpert Kandlbinder Patent- und Rechtsanwälte Partnerschaft mbB
(86) International application number: PCT/JP2013/004607
(87) International publication number: WO 2014/020900

(57) **Abstract**

When processing a female screw in a hole of a metallic material having the hole for female screw processing, a method includes forming a screw groove by sequentially pressing a processing portion of a male screw-shaped tool against an inner periphery of the hole only by a motion of a revolution of the male screw-shaped tool on a certain horizontal plane without rotation by itself in the state of gripping or fixing the metallic material to transfer a shape of the processing portion. A processing machine body gripping or fixing the metallic material having the hole for female screw processing; an X-Y axis table capable of making controlled movement to make an arcuate swinging motion of the processing machine body by exhibiting a required pressing force; and the male screw-shaped tool to be fixed onto the X-Y axis table are provided, and the male screw-shaped tool fixed onto the X-Y axis table forms a screw groove by sequentially pressing the processing portion of the male screw-shaped tool against the inner periphery of the hole only by a motion of a revolution on a certain horizontal plane without rotation by itself to transfer a shape of the processing portion.

## Description

### TECHNICAL FIELD

The present application relates to a method of processing a female screw in a hole of a metallic material having the hole for processing a female screw, and an apparatus therefor.

### BACKGROUND ART

As publicly known, a female screw constitutes one side of a screw, which is the most universal fastening element.

In the related art, it is known that the female screw is processed by a tapping process.

However, processing of the female screw having a relatively large diameter is generally not performed by the tapping process.

A principal method of processing a female screw having a relatively large diameter is a cutting process using a single point tool (threading tool) (for example, see Patent Document 1).

However, the cutting process using the single point tool (threading tool) has no alternative method even though there are problems of disposal of generating machining swarf and damage of blade edge of the tool caused by generation of the machining swarf and the like.

As a female threading method, for example, a method of pressing a threading blade referred normally to as chaser against a cut surface of a tube member, and moving the blade forward and backward in a direction of a tube axis while rotating the tube member is employed.

Whether it is the single point tool (threading tool) or tapping, it is obliged to move relatively with the desired female thread by an amount corresponding to a pitch of the screw per one relative rotation in an axial direction of the female screw desired to be processed. Therefore, a movable portion to be controlled is increased and, as a consequence, design of a processing machine which is high in strength and rigidity is not achieved.

Since a rotation of the tool by a number of times corresponding to the number of threads is required (for example, see Patent Document 1), processing time is limited by itself.

### PRIOR ART DOCUMENT

### PATENT DOCUMENT

Patent Document 1: Japanese Unexamined Patent Application Publication No.2012-30349

### DISCLOSURE OF THE INVENTION

### PROBLEMS TO BE SOLVED BY THE INVENTION

Accordingly, it is conceivable to apply a screw processing method which does not generate machining swarf in the same manner as a fluteless tap which has a great effect on screws having relatively small diameter to products having relatively large diameter, to which the fluteless tap is not generally applied. However, a radial load required for a male screw-shaped tool varies depending on conditions which affect each time such as desired effective length of the female screw, hardness of a material, and a diameter of the male screw-shaped tool. Therefore, the radial load required for the male screw-shaped tool is ten times or more of the process aiming at the cutting process by the single point tool (threading tool) is required.

In addition, the male screw-shaped tool is extremely similar to an NC milling cutter with a rotation of a main shaft stopped in terms of motility function, but requires a significantly larger radial load (for example, 50 kNf or larger) of the main shaft than an allowable radial load of the main shaft of the normal milling cutter.

In this manner, there is no machine which covers 50 kNf or larger radial load of the main shaft.

Therefore, the screw processing method which does not generate the machining swarf cannot be applied to the products having relatively large diameter to which the fluteless tap is not generally applied by using the method and the apparatus of the related art.

The present invention is intended to solve the problems of the method of the related art described thus far, and it is an proposition of the present invention to provide a method of processing a female screw which does not generate machining swarf and adapts to products having relatively large diameter, to which the fluteless tap is not generally applied, in the same manner as a fluteless tap having an effect on screws having relatively small diameters, and an apparatus therefor.

It is another proposition of the present invention to provide a method capable of processing a female screw without generating machining swarf regardless an obstacle such as a key groove or the like is provided in an inner diameter portion of a hole in a material, and an apparatus therefor.

### MEANS FOR SOLVING THE PROBLEMS

The method of processing a female screw of the present invention includes forming a screw groove by sequentially pressing a processing portion of a male screw-shaped tool against an inner periphery of a hole of the metallic material having the hole for female screw processing only by a motion of a revolution of the male screw-shaped tool on a certain horizontal plane without rotation by itself in the state that the metallic material is gripped or fixed to transfer a shape of the processing portion when processing the female screw in the hole.

In the present invention, a diameter of the hole is an intermediate diameter between a crest diameter and a root diameter of a desired screw.

In the present invention, the male screw-shaped tool has the same pitch as the female screw to be processed and has a small diameter.

A female screw processing apparatus of the present invention includes a processing machine body gripping or fixing a metallic material having a hole for female screw processing, an X-Y axis table capable of making controlled movement to make an arcuate swinging motion of the processing machine body by exhibiting a required pressing force, and a male screw-shaped tool to be fixed onto the X-Y axis table, and the male screw-shaped tool fixed onto the X-Y axis table forms a screw groove by sequentially pressing a processing portion of the male screw-shaped tool against an inner periphery of the hole only by a motion of a revolution of the male screw-shaped tool on a certain horizontal plane without rotation by itself to transfer a shape of the processing portion.

The present invention is also provided with a control apparatus controlling the X-Y axis table so as to make an arcuate swinging motion by exhibiting the required pressing force with respect to the processing machine body.

In the present invention, the male screw-shaped tool configured to shape a desired female screw by transferring the shape thereof needs to have the same pitch length as the desired female screw as a matter of course. Therefore, since the screw diameter of the male screw-shaped tool is smaller than the screw diameter of the desired female screw, a helical angle formed by the screw thread is larger than that of the female screw. For example, if the diameter of the male screw-shaped tool is half the diameter of the female screw, the helical angle is substantially doubled. In order to shape the same pitch as the male screw-shaped tool on the female screw by overcoming this gap, securing certain slippage constantly at a contact portion, that is, robust synchronization by avoiding rotation together, is required.

In order to solve the gap of the helical angle described above, means that is employed by the present invention is consequently to maintain the above-described synchronization robustly. When a difference in diameter between the female screw and the male screw-shaped tool is large, the male screw-shaped tool moves away from the processed female screw early enough so that the interference with the shaped female screw is ignorable. Although an occurrence of the problem is not obvious in speculation, occurrence of inclination due to deflection of the male screw-shaped tool becomes obvious in practice, which is a weak point in accurate formation of the female screw by transfer forming.

If the difference in diameter between the female screw and the male screw-shaped tool is reduced, the occurrence of inclination of the male screw-shaped tool is reduced. However, an angle of revolution is increased until engagement between the female screw and the male screw-shaped tool is released, so that a distance of interference and engagement between the female screw and the male screw-shaped tool is increased. Therefore, a resistance of the revolution of the male screw-shaped tool is increased. Irrespective of this resistance, there is no other way than increasing the rigidity of the processing machine in order to ensure smooth revolution unaccompanied by a slip-stick phenomenon.

In view of such circumstances, the X-Y axis table of the female screw processing machine of the present invention has an extremely short stroke with only a difference between a radius of the desired female screw and a radius of the male screw-shaped tool as a movable range. In addition, a height difference between an X-axis rail and a Y-axis rail in a Z direction is designed to be minimized, so that a required rigidity is secured.

When considering the fact that the female screw hole is a blind hole, and a tact time at the time of mass-production, a cantilevered shaft is convenient for the male screw-shaped tool. When a thrust load required for required transfer forming, the male screw-shaped tool is fixedly supported at two points straddling a female screw processing area. In this case, there may be the case where machines including two sets of the X-Y axis table having the same design and interlocked with each other are necessary.

### ADVANTAGEOUS EFFECTS OF INVENTION

The present invention is successful in achievement of processing machine ensuring required rigidity and overcoming the helical angle gap by a design devoting to a short stroke and a reduction of height difference between the X-axis rail and the Y-axis rail in the Z direction. Although a generated radial load is large, it has no influence on the number of crests of the screw and the effective thread length and, in principle, processing of the female screw can be completed in one turn, and even when being operated as sequential processing, within several turns.

The present invention is free from being annoyed by disposal of machining swarf generated at the time of cutting process using the single point toll (threading tool) also for a female screw having a relatively large diameter, to which the tapping process is not generally applied. In view of the processing principle, an advantage that the process is completed in a short time is achieved as being represented by a simple motion of the male screw-shaped tool such as simply revolving on a single horizontal plane.

### BRIEF DESCRIPTION OF THE DRAWINGS

FIG. 1 is an explanatory drawing showing a method of processing a female screw according to an embodiment of the present invention.
FIG. 2 is a cross-sectional view showing a principal portion of FIG. 1.
FIG. 3 is a plan view showing a processing apparatus for a female screw according to the embodiment of the present invention.
FIG. 4 is a drawing viewed in a direction indicated by an arrow A in FIG. 3.
FIG. 5 is a drawing viewed in a direction indicated by an arrow B in FIG. 3.
FIG. 6 is a cross-sectional view of a nut member for a ball screw machined according to another embodiment of the present invention.
FIG. 7 is a side view of FIG. 6.
FIG. 8 is a front view showing a male screw-shaped tool configured to process the nut member for the ball screw in FIG. 6.
FIG. 9 is a side view of FIG. 8.

### BEST MODE FOR CARRYING OUT THE INVENTION

The present invention will be described with reference to embodiments shown in the drawings below.

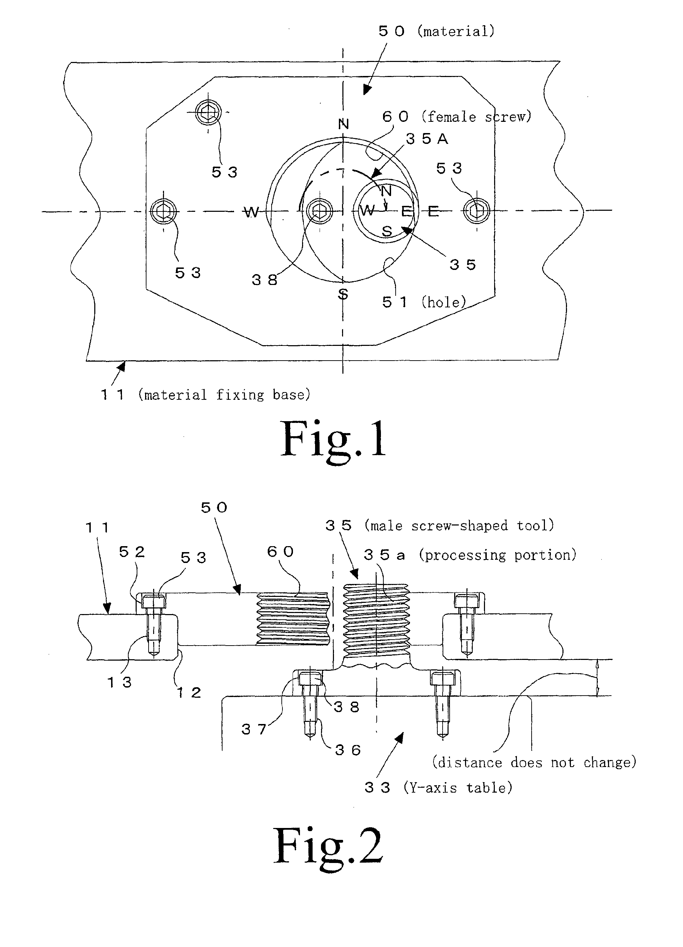

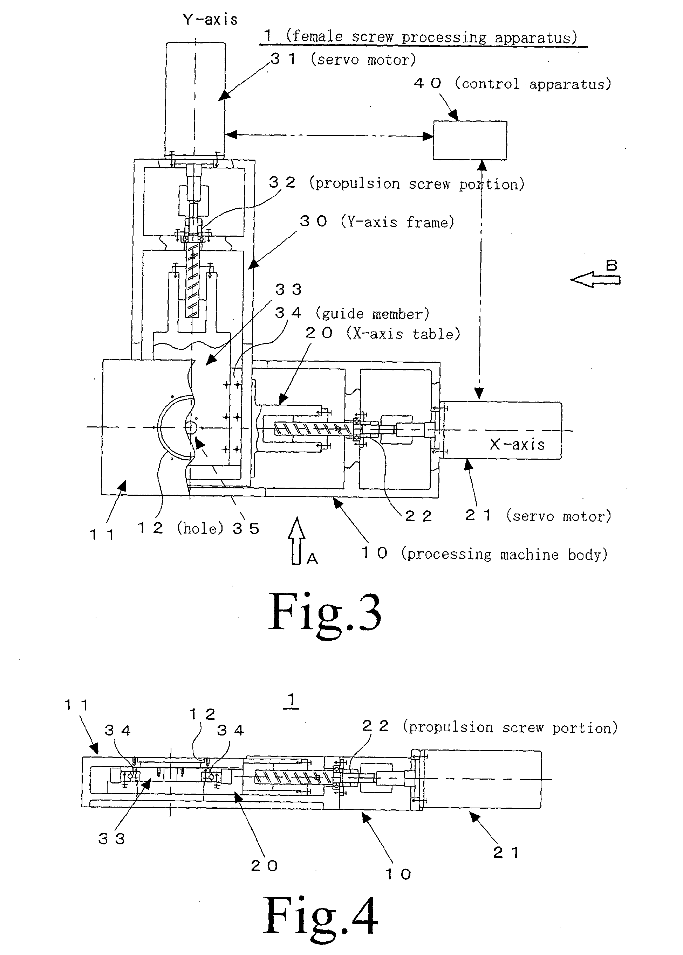

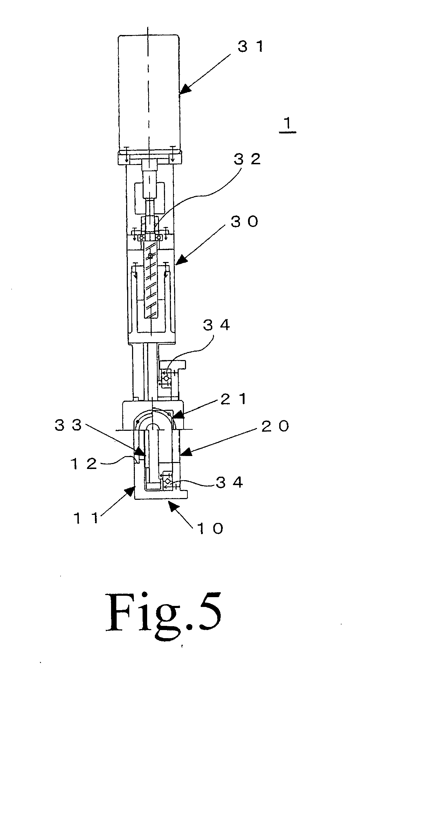

FIG. 1 shows a method of processing a female screw 60 according to an embodiment of the present invention, and FIG. 2 shows a principal portion of FIG. 1. FIG. 3 to FIG. 5 show a female screw processing apparatus 1 used for the method of processing the female screw 60 of this embodiment. FIG. 2 shows only an element portion.

The female screw processing apparatus 1 of this embodiment includes a processing machine body 10, an X-axis table 20 mounted on the processing machine body 10, and a Y-axis frame 30 fixed to the X-axis table 20 so that a Y-axis table 33 is positioned on the X-axis table 20.

The processing machine body 10 is fixed to a table having a proper height (not shown) while considering a working height or the like.

A material fixing base 11 configured to fix a metallic material 50 having a hole 51 is arranged on an upper surface of the processing machine body 10. The material fixing base 11 is provided with a hole 12 for fitting the metallic material 50. The metallic material 50 is provided with holes 52, for example, at three positions in the periphery thereof. The material fixing base 11 is provided with screw holes 13 for fixing the metallic material 50 with fastening bolts 53 after the metallic material 50 has fitted into the hole 12.

The material fixing base 11 is fixed to the processing machine body 10 so as to be positioned on the X-axis table 20. The X-axis table 20 is arranged on the processing machine body 10 so as to move on an X axis via a propulsion screw portion 22 rotated by a servo motor (X-axis motor) 21 arranged on the processing machine body 10.

The Y-axis frame 30 is fixed to the X-axis table 20 so as to be positioned on the X-axis table 20. The Y-axis frame 30 is provided with the Y-axis table 33 moving on a Y-axis via a propulsion screw portion 32 rotating by a servo motor (Y-axis motor) 31 in the same manner as the X-axis table 20. In this case, the Y-axis table 33 moves in a Y-axis direction along a guide member 34 such as a cross roller guide, for example, provided on the X-axis table 20.

The Y-axis table 33 functions as a tool placing base on which a male screw-shaped tool 35 is to be fixed. The male screw-shaped tool 35 has a processing portion 35a having a screw shape having the same pitch as the female screw to be processed and a small diameter. The male screw-shaped tool 35 includes a plurality of holes 36 at a skirt portion, and is fixed to the Y-axis table 33 via holes 34 provided in the Y-axis table 33 with fastening bolts 37.

As described thus far, since the Y-axis frame 30 is fixed to the X-axis table 20 so that the Y-axis table 33 is positioned on the X-axis table 20, a distance (a vertical direction of the paper plane in FIG. 2, that is, in a Z-axis direction) between the material fixing base 11 fixed to the processing machine body 10 so as to be positioned on the X-axis table 20 and the Y-axis table 33 does not change.

The servo motor (X-axis motor) 21 and the servo motor (Y-axis motor) 31 communicate with a control apparatus 40 to move the X-axis table 20 and the Y-axis table 33 in an X-axis direction and the Y-axis direction, respectively. The servo motor (X-axis motor) 21 and the servo motor (Y-axis motor) 31 are controlled in operation based on a command from the control apparatus 40 so that the Y-axis table 33 follows a locus drawn based on an expression (X² + Y² = R²). In other words, the control apparatus 40 controls the X-axis table 20 and the Y-axis table 33 so as to make an arcuate swinging motion while effecting a required pressing force with respect to the processing machine body 10.

Subsequently, an operation of this embodiment will be described.

First of all, as shown in FIG. 1 and FIG. 2, the male screw-shaped tool 35 has a processing portion 35a having a screw shape having the same pitch as the female screw to be processed and a diameter smaller than the female screw 60 to be processed. The male screw-shaped tool 35 is fixed onto the Y-axis table 33 with fastening screws 37.

Subsequently, after the metallic material 50 has fitted into the hole 12 of the material fixing base 11 so as to be inserted through the hole 51 from above the male screw-shaped tool 35, the metallic material 50 is fixed onto the material fixing base 11 with fastening screws 53.

Subsequently, the control apparatus 40 drives the servo motor (X-axis motor) 21 and the servo motor (Y-axis motor) 31 to move the X-axis table 20 and the Y-axis table 33 in the X-axis direction and the Y-axis direction, respectively.

Subsequently, the control apparatus 40 controls motions of the servo motor (X-axis motor) 21 and the servo motor (Y-axis motor) 31 so that the Y-axis table 33 follows a locus drawn based on an expression (X² + Y² = R²).

Subsequently, the control apparatus 40 moves the X-axis table 20 and the Y-axis table 33 in the X-axis direction and the Y-axis direction respectively so that a point W of the male screw-shaped tool 35 is positioned at the point W of the hole 51 of the metallic material 50 as shown in FIG. 1, for example.

Subsequently, the control apparatus 40 moves the male screw-shaped tool 35 fixed to the Y-axis table 33 along a locus of movement indicated by an arrow 35A on an inner periphery of the hole 51 formed in the metallic material 50 fixed onto the material fixing base 11 as shown in FIG. 1. The control apparatus 40 controls the motions of the servo motor (X-axis motor) 21 and the servo motor (Y-axis motor) 31 so as to shape while deforming the hole 51 of the metallic material 50 before the forming of the female screw in the female screw 60.

In FIG. 1, the locus of movement indicated by the arrow 35A of the male screw-shaped tool 35 is shown as being 180 degrees for explanation. As a matter of course, in this embodiment, the control apparatus 40 moves the male screw-shaped tool 35 until the entire circumference of the hole 51 of the metallic material 50 before the forming of the female screw is deformed into the female screw 60, that is, until the locus of movement indicated by the arrow 35A of the male screw-shaped tool 35 reaches 360 degrees. Therefore, the control apparatus 40 causes the male screw-shaped tool 35 to make a circular motion while controlling the motions of the servo motor (X-axis motor) 21 and the servo motor (Y-axis motor) 31, and presses the processing portion 35a of the male screw-shaped tool 35 on the inner periphery of the hole 51 sequentially to transfer the shape of the processing portion 35a, whereby the screw groove is shaped.

In this process, as shown in FIG. 1, a point N of the hole 51 of the metallic material 50 and a point N of the male screw-shaped tool 35 come into contact with each other for the first place. Subsequently, a point E of the hole 51 of the metallic material 50 and a point E of the male screw-shaped tool 35 come into contact with each other. Subsequently, a point S of the hole 51 of the metallic material 50 and a point S of the male screw-shaped tool 35 come into contact with each other. Subsequently, a point W of the hole 51 of the metallic material 50 and a point W of the male screw-shaped tool 35 come into contact with each other. The rotational phases of the respective members do not change. In other words, the hole 51 of the metallic material 50 and points N-E-S-W of the male screw-shaped tool 35 do not rotate.

During this motion, the metallic material 50 and the male screw-shaped tool 35 do not move relative to each other in the Z-axis direction, and do not have to move relative to each other in the Z-axis direction (vertical direction of the paper plane in FIG. 2).

As described above, according to this embodiment, the metallic material 50 of a ring-shaped product is fixedly gripped by the material fixing base 11 and the screw groove may be shaped by transferring the shape of the processing portion 35a by sequentially pressing the processing portion 35a of the male screw-shaped tool 35 from inside of the hole 51 of the metallic material 50 of the ring-shaped product. Therefore, the female screw 60 having a relatively large diameter such as M40-P1.5 (an outer diameter of 40 mm, a pitch 1.5 of mm), for example, can be shaped finally inside of the hole 51 of the metallic material 50.

In the female screw processing apparatus 1 of the present invention, the forming process can be programmed so that, for example, a hole diameter R of the female screw 60 is shaped so as to start from a rather small R, and reach a complete screw thread in several turns.

In the embodiment described above, the metallic material 50 is fixed to the material fixing base 11 with the fastening bolts 53. However, the present invention is not limited thereto, and the metallic material 50 may be fixed to the material fixing base 11 via a lashing device.

In the embodiment described above, the case where the female screw 60 is shaped by the rotation of the male screw-shaped tool 35 in the hole 51 of the metallic material 50 by one turn has been described. However, the present invention is not limited thereto, and the control apparatus 40 can control the male screw-shaped tool 35 so as to rotate in the hole 51 of the metallic material 50 by a plurality of times.

In the above-described embodiment, a single-thread female screw has been described. However, the present invention is not limited thereto, and a double-thread screw can be formed by using a male screw-shaped tool having a double-thread screw.

Furthermore, in loop grooves for ball screw in which every thread is closed, a groove including part having a groove depth deeper than other portions such as a ball circulating bypass can be shaped depending on the tool. An inner diameter surface on which a plurality of the closed loop grooves exist can also be formed simultaneously as a matter of course.

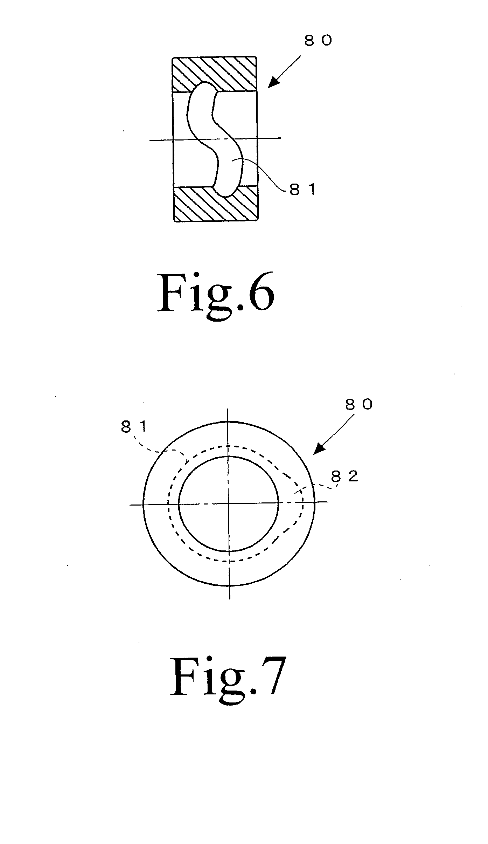

An example will be described on a nut member 80 for a ball screw that has a processed female circulating path 81 provided with an S-shaped bypass 82 formed for returning a ball to one pitch before with reference to FIG. 6 to FIG. 9.

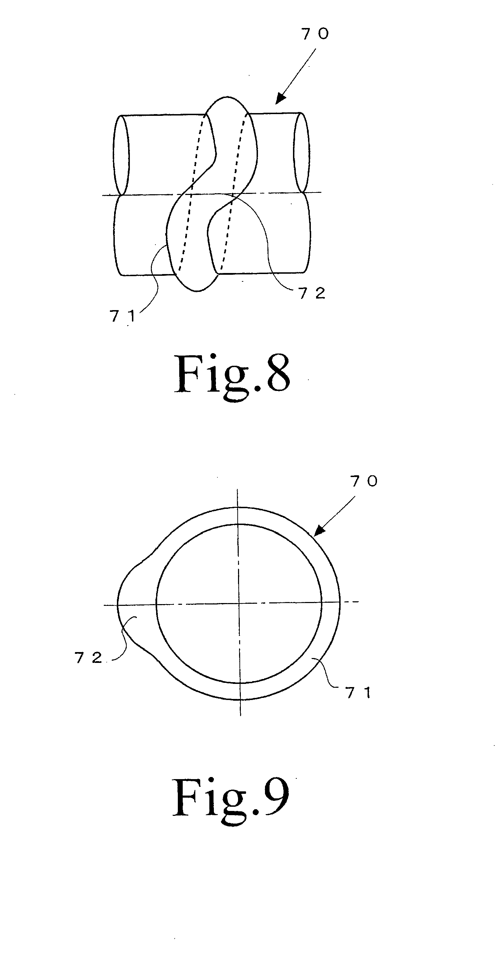

FIG. 8 and FIG. 9 show a male screw-shaped tool 70 configured to process the nut member 80 for the ball screw having the female circulating path 81 provided with the S-shaped bypass 82. A processing portion 72 for processing the S-shaped bypass 82 protrudes outward with respect to a processing portion 71 for forming the female circulating path 81.

The male screw-shaped tool 70 is used by being replaced with the male screw-shaped tool 35 fixed to the Y-axis table 33 in FIG. 1 and FIG. 2, for example.

A metallic material having a hole suitable for the hole of the nut member 80 is prepared as the metallic material before processing the nut member 80 in the same manner as the metallic metallic material 50 having the hole 51 of the embodiment described above, and is fixed to the material fixing base 11.

In this example, the processing method is the same as that of the embodiment described above.

In this example, the nut member 80 for the ball screw having the female circulating path 81 provided with the single S-shaped bypass 82 processed thereon by using the male screw-shaped processing tool 70 provided with a set of the processing portion 71 configured to form the female circulating path 81 and the processing portion 72 configured to process the S-shaped bypass 82 has been described. The present invention is not limited thereto, and it is also possible to process the nut member 80 for the ball screw having a plurality of sets of the female circulating paths 81 provided with the S-shaped bypass 82 by using the male screw-shaped processing tool 70 provided with a plurality of sets of the processing portion 71 configured to form the female circulating path 81 and the processing portion 72 configured to process the S-shaped bypass 82.

### REFERENCE SIGNS LIST

- 1: female screw processing apparatus
- 10: processing machine body
- 11: material fixing base
- 12: hole
- 20: X-axis table
- 21: servo motor (X-axis motor)
- 22: propulsion screw portion
- 30: Y-axis frame
- 31: servo motor (Y-axis motor)
- 32: propulsion screw portion
- 33: Y-axis table
- 34: guide member
- 35: male screw-shaped tool
- 40: control apparatus
- 50: metallic material
- 51: hole
- 60: female screw

## Claims

1. A method of processing a female screw comprising:
forming a screw groove by sequentially pressing a processing portion of a male screw-shaped tool against an inner periphery of a hole of a metallic material having the hole for female screw processing only by a motion of a revolution of the male screw-shaped tool on a certain horizontal plane without rotation by itself in a state that the material is gripped or fixed to transfer a shape of the processing portion when processing the female screw in the hole.

2. The method of processing a female screw according to Claim 1, wherein a diameter of the hole is an intermediate diameter between a crest diameter and a root diameter of a desired screw.

3. The method of processing a female screw according to Claim 1 or 2, wherein the male screw-shaped tool has a same pitch as the female screw to be processed and has a small diameter.

4. A female screw processing apparatus comprising:
a processing machine body gripping or fixing a metallic material having a hole for female screw processing;
an X-Y axis table capable of making controlled movement to make an arcuate swinging motion of the processing machine body by exhibiting a required pressing force; and
a male screw-shaped tool to be fixed onto the X-Y axis table, wherein
the male screw-shaped tool fixed onto the X-Y axis table forms a screw groove by sequentially pressing a processing portion of the male screw-shaped tool against an inner periphery of the hole only by a motion of a revolution of the male screw-shaped tool on a certain horizontal plane without rotation by itself to transfer a shape of the processing portion.

5. The processing apparatus for a female screw according to Claim 4, further comprising: a control apparatus controlling the X-Y axis table so as to make an arcuate swinging motion by exhibiting the required pressing force with respect to the processing machine body.
